# EUROPÄISCHE PATENTANMELDUNG

(11) **EP 1 024 287 A1**
(43) Veröffentlichungstag der Anmeldung: **02.08.2000**
(21) Anmeldenummer: 00109879.7
(22) Anmeldetag: 09.07.1997
(51) Int. Cl.: F04B 53/08

(54) **Pumpaggregat mit einer Antriebskühlung mittels der zu fördernden Flüssigkeit**

(30) Priorität: 17.07.1996 DE 19628781
(62) Teilanmeldung aus: 97111614.0
(71) Anmelder: Voith Turbo GmbH & Co. KG, 89522 Heidenheim (DE)
(72) Erfinder: Nagel, Günther, 89555 Stelnheim (DE)
(74) Vertreter: Koch, Annegret Christa

(57) **Zusammenfassung**

Die Erfindung betrifft ein Pumpaggregat zum Fördern einer Flüssigkeit, das eine hydrostatische oder hydrodynamische Pumpe und einen von einem Gehäuse umgebenen elektromotorischen Antrieb aufweist;
das Gehäuse ist im Bereich des Antriebs zur Führung der die Antriebs- und Lagerabwärme aufnehmenden Pumpflüssigkeit außerhalb des Antriebsinnenraumes zweischalig ausgeführt und/oder weist ein Kanalsystem auf, wobei die Pumpflüssigkeit von der Pumpe mindestens unter Durchströmen des Gehäuses ohne Zwischenspeicherung angesaugt wird;
es ist ein Kreislauf zur Führung der Pumpflüssigkeit außerhalb des Pumpaggregates vorgesehen;
im Kreislauf ist ein vom Pumpaggregat externer Tank angeordnet.

## Beschreibung

Die Erfindung betrifft ein Pumpaggregat zum Fördern einer Flüssigkeit, das eine hydrostatische Pumpe und einen von einem Gehäuse umgebenen elektromotorischen Antrieb aufweist.

Die Antriebe derartiger Pumpaggregate sind meist Elektromotoren oder Verbrennungskraftmaschinen. Die Elektromotoren sind in der Regel mit einer Luft- oder Wasserkühlung ausgestattet. In beiden Fällen sind der Kühlkreislauf für das Pumpaggregat und der pumpeninterne Förderkreislauf voneinander getrennt.

Die Wasserkühlung hat den Vorteil einer effektiven Wärmeabfuhr und einer guten Aggregatsschalldämmung. Allerdings stellt der Wasserverbrauch einen zusätzlichen Betriebskostenfaktor dar.

Die Luftkühlung benötigt in der Regel einen Eigen- oder Fremdlüfter, wobei beide die Baulänge des Pumpaggregats vergrößern. Eine wirkungsvolle Schalldämmung ist nur mit hohem Bauaufwand möglich, z.B. mit einer internen Kühlluftzirkulation.

Es sind auch Flüssigkeitskühlungen bekannt, bei denen die zu fördernde Flüssigkeit durch den Innenraum des die Pumpe antreibenden Elektromotors gefördert wird. Allerdings haben die Motoren zum Teil hohe Planschverluste.

Aus der JP-PS 60-135679 ist eine Radialkolbenpumpe bekannt, bei welcher zur Erhöhung der Temperatur des Betriebsfluides - bzw. mittels zur Verbesserung des Pumpenwirkunsgrades das Betriebsfluid von einem Eingang bis zur Saugseite der Pumpe in einem Tankgehäuse geführt wird, wobei das Tankgehäuse von einer Ummantelung des Motorgehäuses gebildet wird. Das Betriebsfluid, welches durch das Tankgehäuse geführt wird, kühlt dabei den Elektromotor und wird danach in einem sogenannten Zwischenspeicher zwischengespeichert. Erst von diesem Zwischenspeicher gelangt das Betriebsfluid zur Saugseite der Pumpe. Eine derartige Ausführung weist den Nachteil auf, daß keine optimale Kühlung während des Dauerbetriebes gewährleistet ist, da der Ansaugvorgang, d.h. das Ansaugen des Betriebsfluides über das Tankgehäuse durch das Vorhandensein eines Zwischenspeichers, nicht fortlaufend erfolgt. Insbesondere beim Anlauf des Pumpaggregates kann die Pumpe zuerst vom Zwischenspeicher bezüglich des bereitzustellenden Betriebsfluides versorgt werden. Der in dieser Ausführung vorhandene Zwischenspeicher erfordert zudem viel Bauraum, insbesondere da dieser sich als ringförmiger Hohlraum um das gesamte Pumpengehäuse erstreckt. Die Gesamtbaueinheit Pumpaggregat baut daher sehr groß.

Um diese Nachteile zu vermeiden, liegt der Erfindung das Problem zugrunde, ein Pumpaggregat zu schaffen, dessen Antriebsbaugruppen bei guter Schalldämmung, geringem Bauvolumen, hohem Motorenwirkungsgrad und bei niedrigen Betriebs- und Gestehungskosten nahezu wartungsfrei, insbesondere im Dauerbetrieb gekühlt werden.

Das Problem wird mit den Merkmalen des Hauptanspruchs gelöst. Dort wird ein Pumpaggregat zum Fördern einer Flüssigkeit, das eine hydrostatische oder hydrodynamische Pumpe und einen von einem Gehäuse umgebenen elektromotorischen Antrieb aufweist, vorgeschlagen, dessen Antriebsbaugruppen mit Hilfe der zu fördernden Flüssigkeit gekühlt werden. Um den Antrieb herum wird außerhalb des Motorinnenraumes die saugseitig strömende Pumpflüssigkeit ohne Zwischenspeicherung geführt.

Die Führung der zu fördernden Flüssigkeit erfolgt kontinuierlich im Betrieb des Pumpaggregates. Die zu fördernde Flüssigkeit wird dazu von einer externen Betriebsmittelbereitstellungsquelle, vorzugsweise in Form eines externen Tankes, angesaugt. Die erfindungsgemäße Lösung ermöglicht es, eine optimale Kühlung der elektrischen Maschine, insbesondere des elektrischen Motors, während des Betriebes des Pumpaggregates zu gewährleisten. Diese Kühlung erfolgt ohne Unterbrechung, da im Betrieb des Pumpaggregates kontinuierlich, d. h. fortwährend, Betriebsmittel aus dem externen Tank angesaugt wird und der hydrostatischen Pumpe zugeführt wird. Des weiteren ist die Schaffung einer sehr kompakten Gesamtbaueinheit mit geringen Kosten und geringem Bauraumbedarf und kurzen Ansaugwegen möglich.

Zur Führung der Pumpflüssigkeit kann das Antriebsgehäuse zweischalig ausgeführt sein. Hierbei wird der Motor, beispielsweise nur mit Ausnahme der Antriebswellendurchführung, von zwei Gehäuseschalen umgeben, die zueinander nahezu überall einen äquidistanten Abstand haben. Zwischen den Gehäuseschalen strömt die angesaugte Pumpflüssigkeit.

Auch können die Gehäuseschalen über Stege miteinander verbunden sein, die die Pumpflüssigkeit nach einem bestimmten Muster durch verschiedene Gehäusebereiche führen. Beispielsweise durchzieht ein spiral- und/oder schraubenförmig gekrümmter Kanal das Gehäuse.

Ferner kann das Gehäuse, gegebenenfalls einschließlich der eventuell montierten Deckel oder Flansche, mit Hohlräumen oder Kanälen versehen sein, die die Pumpflüssigkeit an die Lager des Antriebs oder andere Abwärme erzeugende Bereiche oder Bauteile heranführen, um dort zumindest einen Teil der Abwärme wegzuführen.

Sofern die Pumpflüssigkeit eine schmierende und nicht korrosive Wirkung hat, können zwischen den Antriebslagern und dem Antriebsinnenraum Wellendichtringe angeordnet werden, wobei die Wellendichtringe zu den Antriebslagern hin abdichten. Auf diese Weise werden die Lager von der Pumpflüssigkeit unter Schmier- und Kühlwirkung durchströmt, ohne daß der Antriebsinnenraum benetzt wird.

Vorzugsweise ist die zweischalige Ausführung des Gehäuses im Bereich des Antriebes, insbesondere im Bereich des Elektromotors, derart ausgebildet, daß eine Führung des Betriebsmittels während des Ansaugvorganges spiralförmig um den Elektromotor erfolgt, so daß entsprechend der Anordnung von Zulauf und Ablauf im Motorengehäuse die einfließende, kühlende Pumpflüssigkeit den gesamten Ringkanal annähernd diagonal durchströmen und füllen kann, bevor sie zum Flanschraum bzw. zur Saugseite der Pumpe gelangt. Diese Führung kann zum einen durch Anordnung der Zulaufbohrung bzw. der Ablaufbohrung aus dem Motorgehäuse und zum anderen durch entsprechende Gestaltung der ringförmigen Kanäle realisiert werden. Im erstgenannten Fall sind in der einfachsten Ausführung die Zulauf- und Ablaufbohrungen bzw. Öffnungen am Motorgehäuse derart angeordnet, daß das Betriebsmittel auf einer in Einbaulage unterschiedlichen Höhe zur Zulaufbohrung aus der Ablaufbohrung austritt. Es besteht jedoch auch die Möglichkeit durch geeignete Maßnahmen bei Anordnung von Zulauf- und Ablaufbohrung in Einbaulage auf einer Höhe eine Führung des Betriebsmittels spiralförmig bzw. diagonal um die zu kühlende Antriebsmaschine, insbesondere den Elektromotor, zwischen Zulauf- und Ablaufbohrung zu gewährleisten.

Vorzugsweise ist die Zulaufbohrung im unteren Bereich, d.h. in Einbaulage unterhalb der geometrisch von den Symmetrielinien der Antriebswellen der Antriebsmaschine, insbesondere des Elektromotors, und der hydrostatischen Pumpe gebildeten Achse angeordnet. Die Anordnung der Ablaufbohrung erfolgt dann vorzugsweise oberhalb der geometrisch durch die Symmetrielinien der Antriebswellen von Antriebsmaschine und hydrostatischer Pumpe gebildeten Achse.

Das anzusaugende bzw. zu fördernde Betriebsfluid kann des weiteren zur Schmierung der Kopplung zwischen Antriebsmaschine und hydrostatischer Pumpe des Pumpaggregates genutzt werden. Vorzugsweise wird dazu das aus dem Ringkanal aus dem Motorgehäuse austretende Betriebsfluid genutzt. Zu diesem Zweck ist der Bereich zwischen dem Gehäuse der Antriebsmaschine, insbesondere des Elektromotors und dem Pumpengehäuse, welcher vorzugsweise von einem Adapterflansch gebildet wird, und in welchem vorzugsweise die Kopplung zwischen Elektromotor und Pumpe realisiert wird, nicht gegenüber dem Ringkanal bzw. dem Betriebsmittel abgedichtet und abgeschirmt. Das Betriebsmittel strömt vielmehr aus dem Motorgehäuse in den sogenannten Flanschraum, welcher vom Adapterflansch umschlossen ist, und gelangt von dort in den Arbeitsraum der hydrostatischen Pumpe. Dies hat den Vorzug, daß die im Bereich des Adapterflanschs angeordnete, in der Regel vorzugsweise als mechanische Kupplung ausgeführte Kupplung, vom Betriebsmittel mitgekühlt und geschmiert werden kann.

Die externe Betriebsmittelversorgungsquelle, insbesondere der externe Tank, ist vorzugsweise in einem Kreislauf, welcher vorzugsweise als offener Kreislauf ausgeführt ist, angeordnet. Dieser Kreislauf wird dabei zwischen dem Pumpaggregat und dem Verbraucher realisiert. Über den externen Tank können zusätzliche Leckageverluste ausgeglichen werden.

Selbstverständlich kann in dem Kreislauf der Pumpflüssigkeit vor oder nach dem Pumpaggregat eine Filter-und/oder Wärmetauschereinheit geschaltet werden. Die Wärmetauschereinheit soll verhindern, daß sich das Betriebsfluid in dem Kreislauf aus dem Pumpaggregat, den Steuerventilen, den Verbrauchern bzw. den Lasteinheiten und dem Tank die Pumpflüssigkeit unzulässig stark erwärmt und damit ihre Kühlwirkung für die Antriebsbaugruppen verliert.

Weitere Einzelheiten der Erfindung ergeben sich aus den nicht oder nur teilweise zitierten Unteransprüchen und den nachfolgend beschriebenen und schematisch dargestellten Ausführungsbeispielen. In den Figuren ist im einzelnen folgendes dargestellt:
- Figur 1:: Längsschnitt durch ein Pumpaggregat
- Figur 2:: Längsschnitt durch ein Pumpaggregat mit zugeordnetem offenen Kreislauf

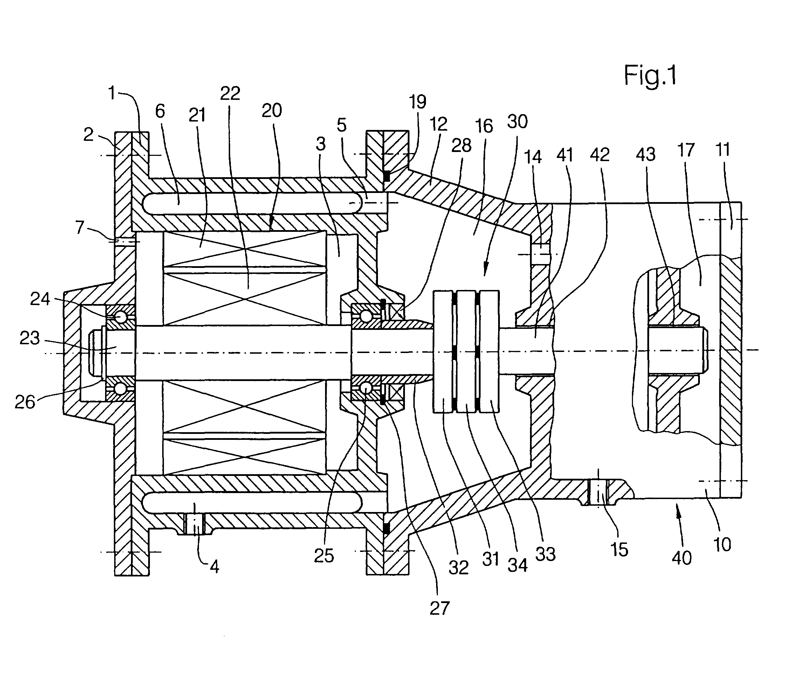

In Figur 1 wird der prinzipielle Aufbau eines Pumpaggregats gezeigt. Das Pumpaggregat umfaßt zwei Baugruppen: einen Antrieb, beispielsweise einen Elektromotor (20), und eine hydrostatische Pumpe (40). Letztere arbeitet meist nach dem Verdrängungsprinzip. Als Verdrängungsmittel können innerhalb der Pumpe u.a. Zähne, Flügel oder Kolben verwendet werden.

Eine derartige Pumpe (40) hat eine Antriebswelle (41), die in einem Pumpengehäuse (10) gelagert ist. Die Antriebswelle (41) sitzt dazu in zwei Gleitlagerbohrungen (42, 43), die hier im Pumpengehäuse (10) integriert sind.

Das Pumpengehäuse (10) geht auf seiner dem Elektromotor (20) zugewandten Seite in einen Adapterflansch (12) über, mit dem es am Gehäuse (1) des Elektromotors (20) angeflanscht ist. Die Flanschverbindung ist mittels eines Dichtrings (19) gegenüber der Umwelt abgedichtet.

Das Pumpengehäuse (10) umschließt zusammen mit dem Adapterflansch (12) und der pumpenseitigen Wandung des Motorengehäuses (1) einen Flanschraum (16). Dieser Raum (16) ist über eine Zuflußbohrung (14) mit dem druckfreien Pumpengehäuseraum (17) oder dem nicht dargestellten Verdrängungsraum der Pumpe (40) verbunden. Über die Zuflußbohrung (14) wird die Pumpflüssigkeit angesaugt. Die verdichtete Pumpflüssigkeit wird druckseitig an einer beispielsweise mit einem Gewinde versehenen Abflußbohrung (15) bereitgestellt.

Der koaxial zur Pumpenwelle (41) angeordnete Elektromotor (20) hat einen wälzgelagerten Rotor (22). Letzterer sitzt auf einer Motorwelle (23), die im Motorengehäuse (1) pumpenseitig in einem Festlager (25) und links davon in einem Loslager (24) geführt ist. Das Loslager wird von einem das Motorengehäuse (1) verschließenden Motorengehäusedeckel (2) getragen.

Im Motorengehäuse (1) ist in einem Motorinnenraum (3) um den Roter (22) herum ein Stator (21) angeordnet. Der trockene Motorinnenraum ist über eine Bohrung (7) mit der Umgebungsluft in Verbindung.

Das Motorengehäuse (1) ist hier mit einem Ringkanal (6) versehen. Der Ringkanal (6) ist koaxial zur Motorwelle (23) innerhalb der Gehäusewandung angeordnet, wobei die Innen- und Außenwandung des Ringkanals (6) zylindrisch geformt sind. Ihre Mittellinien liegen auf der Mittellinie der Motorwelle (23). Der Ringkanal (6) umschließt vollständig den Stator (21). Dabei ist er gegen die äußere Umgebung und gegenüber dem Motorinnenraum (3) abgedichtet. Seine mit einem Gewinde versehene Zulaufbohrung (4) hat der Ringkanal (6) im unteren, hinteren Bereich der äußeren Wandung des Motorengehäuses (1). Seine Abflußbohrung (5) mündet im vorderen, oberen Gehäusebereich in den Flanschraum (16). Bei dieser Anordnung von Zulauf und Ablauf im Motorengehäuse (1) muß die einfließende, kühlende Pumpflüssigkeit den gesamten Ringkanal annähernd diagonal durchströmen und füllen, bevor sie in den Flanschraum (16) gelangt.

Im Flanschraum (16) befindet sich eine drehstarre oder drehelastische, bewegliche Kupplung (30). Im Ausführungsbeispiel ist eine Zwischenscheibenkupplung gezeigt. Sie besteht aus einem Motorflansch (31), einem Pumpenflansch (33) und einer elastischen Zwischenscheibe (34). In den beiden Flanschen (31, 33) sind wechselweise Mitnahmebolzen eingelassen, die in entsprechende Bohrungen der Zwischenscheibe (34) eingreifen. Durch die Kupplung (30) werden die den Baugruppen (20) und (40) eigenen Systemkräfte weitgehend voneinander isoliert.

Zwischen dem Motorflansch (31) und dem Festlager (25) sitzt eine Distanzhülse (32), auf deren Außenkontur ein Wellendichtring (28) gleitet. Letzterer dichtet den Flanschraum (16) gegenüber dem Motorinnenraum (3) ab.

Der Ringkanal (6) und der Flanschraum (16) sind über die Ablaufausnehmung (5) und die Zuflußbohrung (14) mit der Pumpe (40) hydraulisch verbunden. Hierdurch wird die Saugseite der Pumpe (40) zur Zulaufbohrung (4) vorverlegt. Das von der Pumpe zu verdichtende Medium, zum Beispiel eine Hydraulikflüssigkeit, wird durch das Motorengehäuse angesaugt, bevor es in die Verdrängungskammer der Pumpe (40) gelangt. Das Hydrauliköl kühlt auf dem Weg zwischen der Zulaufbohrung (4) und der Zuflußbohrung (14) zumindest den Elektromotor und schmiert gleichzeitig im Flanschraum die Kupplung (30).

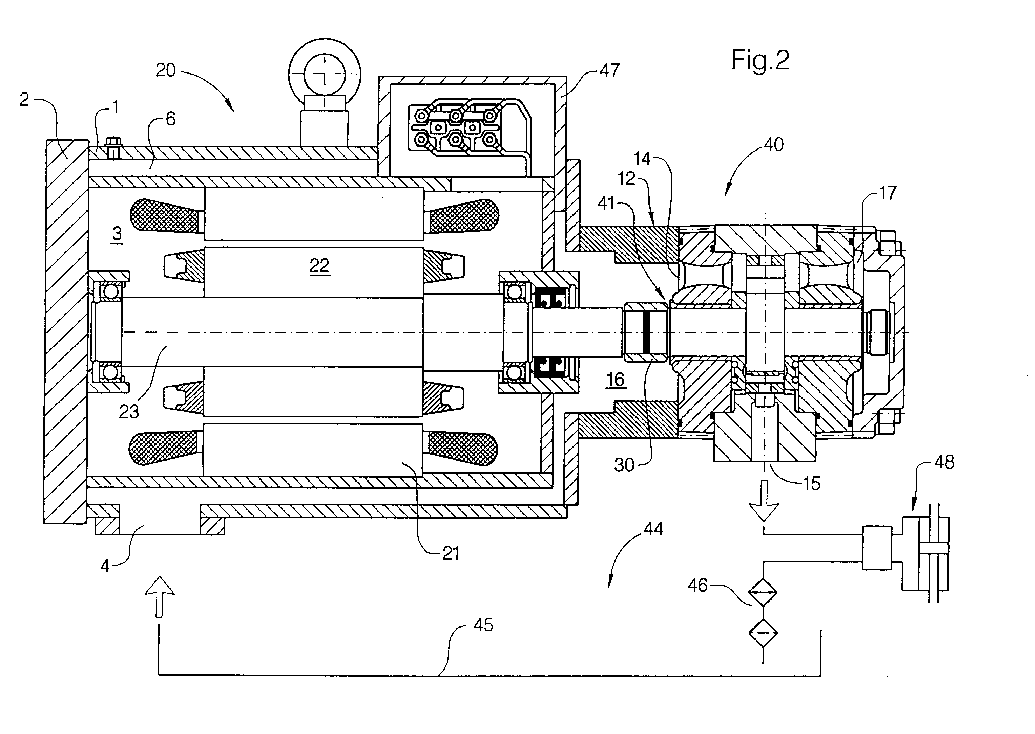

Die Figur 2 verdeutlicht anhand eines Längsschnittes durch ein Pumpaggregat eine weitere Ausführung dessen mit Darstellung des zugehörigen offenen Kreislaufes. Da diese Ausführung nach dem gleichen Grundprinzip, wie für das in der Figur 1 beschriebene Pumpaggregat, betrieben wird, werden für gleiche Elemente die gleichen Bezugszeichen verwendet.

Das Pumpaggregat umfaßt zwei Baugruppen, einen Antrieb, hier beispielsweise einen Elektromotor (20), und eine hydrostatische Pumpe (40). Eine derartige Pumpe (40) weist ein Pumpengehäuse (10) auf. Das Pumpengehäuse (10) geht auf seiner dem Elektromotor (20) zugewandten Seite in einen Adapterflansch (12) über. Mit dem Adapterflansch ist die Pumpe (40) am Gehäuse (1) des Elektromotors (20) angeflanscht. Der Adapterflansch (12) umschließt dabei mit dem Pumpengehäuse (10) und der pumpenseitigen Wandung des Gehäuses (1) des Elektromotors (20) einen Flanschraum (16). Der Flanschraum (16) ist über eine Zulaufbohrung (14) mit einem druckfreien Pumpengehäuseraum (17) oder dem hier im einzelnen nicht dargestellten Verdrängungsraum der Pumpe (40) verbunden. Die verdichtete Pumpflüssigkeit wird druckseitig dann beispielsweise an einer Abflußbohrung (15) bereitgestellt.

Die Kopplung zwischen Antriebswelle (23) des Elektromotors (20) und der Antriebswelle (41) der Pumpe (40) erfolgt dabei über eine Kupplung (30). Die Verbindung zwischen der Antriebswelle (23) des Elektromotors (20) und der Antriebswelle (41) der Pumpe (40) erfolgt im Bereich des Flanschraumes (16), d. h. die Kupplung (30) ist im Flanschraum (16) integriert.

Dem Pumpaggregat ist des weiteren ein offener Kreislauf (44) zugeordnet. Dieser Kreislauf wird durch die Kopplung zwischen der Abflußbohrung (15) und der Zulaufbohrung (4) beschrieben. Im Kreislauf ist im dargestellten Fall der anzutreibende Verbraucher (48) mit integriert. Das druckseitig bereitgestellte komprimierte bzw. mit aufgeprägten Druck bereitgestellte Betriebsfluid - bzw. mittel an der Abflußbohrung (15) wird dann an eine Stelleinheit des Verbrauchers (48) geleitet. Das von dieser genutzte Betriebsfluid - bzw. mittel gelangt dann über zusätzliche Einrichtungen, beispielsweise in Form von Kühleinrichtungen (46), in einen außerhalb des Pumpaggregates befindlichen externen Tank (45). Zwischen diesem Tank (45) und der Zulaufbohrung (4) besteht eine Verbindung, vorzugsweise in Form einer hydraulischen Versorgungsleitung.

Im dargestellten Ausführungsbeispiel ist der externe Tank (45) außerhalb des Pumpaggregates, d. h. räumlich getrennt von diesem angeordnet. Dies bietet den Vorteil, daß das Pumpaggregat in seiner kompakten Bauweise als komplett vormontierte Baugruppe angeboten werden kann und hinsichtlich seines Einsatzes relativ frei ist. Es besteht jedoch theoretisch auch die Möglichkeit, den externen Tank zusätzlich bereits unmittelbar am Außengehäuse des Elektromotors (20) oder im Bereich des Adapterflansches (12) anzuordnen. Das Pumpaggregat baut jedoch in diesem Fall größer.

Die in der Figur 2 dargestellte Ausführung, insbesondere die Ausführung des dem Pumpaggregat zugeordneten Kreislaufes (45) stellt nur eine von vielen Möglichkeiten dar. Wesentlich zur Erzielung des erfindungsgemäßen Effektes ist es jedoch, daß zwischen dem Ansaugen im Ringkanal (6) bzw. im doppelwandigen Gehäuse (1) des Elektromotors (20) und dem Eintritt in das Pumpengehäuse (10) keine Zwischenspeicherung des Betriebsmittels erfolgt. Das Betriebsmittel wird vielmehr kontinuierlich über die Zulaufbohrung (4) zum Eintritt (14) in das Pumpengehäuse (10) geführt, womit eine optimale Kühlung der Antriebsmaschine, insbesondere des Elektromotors (20) während des Betriebes und insbesondere bereits ab Beginn der Inbetriebnahme realisiert wird.

Das in den Figuren 1 und 2 dargestellte Grundprinzip kann weiter modifiziert werden. Im einzelnen bestehen hinsichtlich der Kühlmittelführung um den Elektromotor sowie der Ausgestaltung des dem Pumpaggregat zugeordneten Kreislaufes (45) eine Vielzahl von Möglichkeiten, welche im Ermessen des Fachmannes liegen.

### Bezugszeichenliste:

- 1: Motorengehäuse
- 2: Motorengehäusedeckel
- 3: Motor-, bzw. Antriebsinnenraum
- 4: Zulaufbohrung
- 5: Ablaufbohrung, Ablaufausnehmung
- 6: Ringkanal
- 7: Bohrung, Entlüftung

- 10: Pumpengehäuse
- 11: Pumpengehäusedeckel
- 12: Adapterflansch

- 14: Zuflußbohrung, Saugseite
- 15: Abflußbohrung, Druckseite
- 16: Flanschraum
- 17: Pumpengehäuseraum, druckfrei

- 19: Dichtring

- 20: Elektromotor, Antrieb
- 21: Stator
- 22: Rotor
- 23: Motorwelle
- 24, 25: Wälzlager
- 26, 27: Sicherungsringe
- 28: Wellendichtring

- 30: Kupplung
- 31: Motorflansch
- 32: Distanzhülse
- 33: Pumpenflansch
- 34: Zwischenscheibe
- 40: Pumpe
- 41: Pumpenwelle, Antriebswelle
- 42, 43: Gleitlagerbohrungen
- 44: Offener Kreislauf
- 45: Externer Tank
- 46: Kühleinrichtung
- 47: Klemmkasten
- 48: Verbraucher

## Patentansprüche

1. Pumpaggregat zum Fördern einer Flüssigkeit, das eine hydrostatische oder hydrodynamische Pumpe und einen von einem Gehäuse umgebenen elektromotorischen Antrieb aufweist;
1.1 das Gehäuse (1-19) ist im Bereich des Antriebs (20) zur Führung der die Antriebs- und Lagerabwärme aufnehmenden Pumpflüssigkeit außerhalb des Antriebsinnenraumes (3) zweischalig ausgeführt und/oder weist ein Kanalsystem auf, wobei die Pumpflüssigkeit von der Pumpe (40) mindestens unter Durchströmen des Gehäuses (1-19) ohne Zwischenspeicherung angesaugt wird;
1.2 es ist ein Kreislauf zur Führung der Pumpflüssigkeit außerhalb des Pumpaggregates vorgesehen;
1.3 im Kreislauf ist ein vom Pumpaggregat externer Tank angeordnet.

2. Pumpaggregat gemäss Anspruch 1, dadurch gekennzeichnet, daß im Kreislauf Einrichtungen zur Kühlung des Betriebsmittels, welche dem Tank in Durchflußrichtung vorgeschaltet sind, angeordnet sind.

3. Pumpaggregat nach einem der Ansprüche 1 bis 2, gekennzeichnet durch die folgenden Merkmale:
3.1 das zweischalig im Bereich des Antriebes (20) zur Führung der der Betriebs- und Lagerabwärme aufnehmenden Pumpflüssigkeit außerhalb des Antriebsinnenraumes (3) ausgebildete Gehäuse und/oder das Kanalsystem weist eine Zulauföffnung und eine Ablauföffnung auf,
3.2 es sind Mittel vorgesehen zur Realisierung einer diagonalen Führung zwischen der Zulauf- und Ablauföffnung des Gehäuses (1 - 19).

4. Pumpaggregat nach Anspruch 3, dadurch gekennzeichnet, daß die Mittel zur diagonalen Führung durch die Anordnung von Zulauf- und Ablaufbohrung zueinander auf unterschiedlichen Höhen in Einbaulage betrachtet gebildet sind.

5. Pumpaggregat nach einem der Ansprüche 3 oder 4, dadurch gekennzeichnet, daß im Bereich des zweischalig ausgeführten Gehäuses (1 - 19) Leiteinrichtungen angeordnet sind.

6. Pumpaggregat nach einem der Ansprüche 1 bis 5, gekennzeichnet durch die folgenden Merkmale:
6.1 die hydrostatische Pumpe weist ein Pumpengehäuse auf,
6.2 die hydrostatische Pumpe (40) ist über einen Adapterflansch (12) mit dem Gehäuse (1 - 19) der Antriebsmaschine (20) verbunden;
6.3 im Bereich des Adapterflansches (12) ist die Kopplung zwischen der Antriebsmaschine (20) und der hydrostatischen Pumpe (40) angeordnet.
